(19)

Europäisches
Patentamt

European
Patent Office

Office européen
des brevets

(11) **EP 4 576 283 A1**

(12) **EUROPEAN PATENT APPLICATION**

(43) Date of publication:
   **25.06.2025 Bulletin 2025/26**

(21) Application number: 24220076.4

(22) Date of filing: **16.12.2024**

(51) International Patent Classification (IPC):
   **H01M 8/04492** *(2016.01)*   **H01M 8/04828** *(2016.01)*
   **H01M 8/04992** *(2016.01)*

(52) Cooperative Patent Classification (CPC):
   **H01M 8/04992; H01M 8/045; H01M 8/04828;**
   H01M 8/04328; H01M 8/04335; H01M 8/04343;
   H01M 8/0435; H01M 8/04358; H01M 8/04373;
   H01M 8/04388; H01M 8/04395; H01M 8/04402;
   H01M 8/0441; H01M 8/04417; H01M 8/04425;
   (Cont.)

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH MA MD TN**

(30) Priority:   **21.12.2023   CN 202311769190**

(71) Applicant: **Robert Bosch GmbH**
   **70442 Stuttgart (DE)**

(72) Inventors:
   • **LI, Longyuan**
     **Shanghai (CN)**
   • **LU, Xiaonan**
     **Shanghai (CN)**
   • **DONG, Mingzhe**
     **Jiangsu (CN)**
   • **CHEN, Xiaoqiu**
     **Jiangsu (CN)**
   • **SHEN, Ziyao**
     **Jiangsu (CN)**

(54) **IN-VEHICLE HYDROGEN FUEL CELL SYSTEM AND ITS HUMIDITY PREDICTION METHODS AND ASSOCIATED EQUIPMENT**

(57)   This invention provides an in-vehicle hydrogen fuel cell system and a method for humidity prediction thereof and related equipment. This humidity prediction method comprises: obtaining status parameters that characterize the current state of the hydrogen fuel cell system; and predicting current humidity at the anodic inlet of the fuel cell stacks of the hydrogen fuel cell system based on the obtained status parameters and using a mixed model. The said mixed model includes a physical model and an AI model of the hydrogen fuel cell system trained using a first training dataset and a second training dataset comprising measurements resulting from a measurement of a state of the hydrogen fuel cell system in a driving condition of one or more vehicles, and the second training dataset comprising measurements obtained by measuring the state of the hydrogen fuel cell system under one or more operating conditions of the said hydrogen fuel cell system.

图 1

**(Cont. next page)**

(52) Cooperative Patent Classification (CPC): (Cont.)
H01M 8/04589; H01M 2250/20

**Description**

**Technical Field**

The present invention generally relates to the technical field of in-vehicle hydrogen fuel cells. In particular, the present invention relates to an in-vehicle hydrogen fuel cell system and a controller thereof, to a method for predicting humidity of an in-vehicle hydrogen fuel cell system, and to a method for training an AI model.

**Background Art**

Fuel cell electric vehicles use in-vehicle fuel cell systems to convert hydrogen into electricity, which powers electric vehicles. Fuel cell electric vehicles (FCEV) with fuel cell system (FCS) offer many advantages. For example, FCEVs are "zero-emission" vehicles, giving them the advantage of being green and environment-friendly, and they have a high energy efficiency level and high reliability, so FCEVs will have an important market share in the future.

Based on this, in-vehicle hydrogen fuel cell systems are a current hot field of research. In existing studies, humidity in hydrogen fuel cell systems has been found to be one of the key factors affecting system efficiency and durability, as low humidity (i.e., too dry an electrical stack) affects the catalyst activity of fuel cell stacks, while low humidity affects the lifespan of the protic exchange films of the fuel cell stacks.

At present, sensors used to measure humidity in hydrogen fuel cell systems on the market are difficult to meet vehicle specification requirements in terms of durability and reliability.

**Summary of Invention**

In this context, according to one aspect of the present invention, there is provided a humidity prediction method for an in-vehicle hydrogen fuel cell system comprising: obtaining status parameters characterizing a current state of a hydrogen fuel cell system; and predicting current humidity at an anodic inlet of a fuel cell stack of a hydrogen fuel cell system based on the acquired status parameters and using a mixed model, wherein the mixed model includes a physical model and an AI model of the hydrogen fuel cell system trained using a first training dataset and a second training dataset comprising measurements resulting from a measurement of a state of the hydrogen fuel cell system in a driving condition of one or more vehicles, and the second training dataset comprising measurements obtained by measuring the state of the hydrogen fuel cell system under one or more operating conditions of the said hydrogen fuel cell system.

In one example, the physical model includes a plurality of sub-models for calculating parameters that are capable of being measured to be used in subsequent operations or as AI model inputs; the said AI model is used to calculate gaseous water molar fraction at the anodic inlet of the fuel cell stack based on the acquired status parameters and the parameters or preset parameters predicted at the anodic inlet of the fuel cell stack; and one of the sub-models of the physical model is used to calculate the humidity at the anodic inlet of the fuel cell stack based on the gaseous water molar fraction at the anodic inlet of the fuel cell stack predicted by the AI model.

In an example, the status parameters that characterize the current state of the hydrogen fuel cell system include one or more of:

- current temperature and current pressure at the anodic inlet of the fuel cell stack;
- current temperature and current pressure at the anodic outlet of the fuel cell stack;
- current temperature and current pressure at the cathodic inlet of the fuel cell stack;
- current temperature and current pressure at the cathodic outlet of the fuel cell stack;
- current temperature and current pressure at the inlet of the hydrogen supply module of the fuel cell stack;
- current rate of current change of the fuel cell stack;
- current temperature and current pressure at the inlet of the cooling water of the fuel cell stack; and
- current temperature and current pressure at the cooling water outlet of the fuel cell stack.

In one example, the first training dataset comprises: Measuring a state of a fuel cell system when the vehicle is traveling on one or more types of roads, wherein the one or more types of roads include one or more of urban roads, village roads, and highways; and/or measuring a state of the fuel cell system when the vehicle's driving speed is within one or more vehicle speed ranges.

In one example, the second training dataset comprises: Measurement of the state of the fuel cell system in a working condition where the output power of the fuel cell stack is increasing; and/or measurement of the state of the fuel cell stack in a working condition where the output power of the fuel cell stack is decreasing.

In one example, the second training dataset comprises: Measurement of the state of the fuel cell system in a working condition where the output power of the fuel cell stack is dynamically changing; and/or measurement of the state of the fuel cell system in a working condition where the output power of the fuel cell stack is stable.

In one example, the second training dataset comprises: Under a variety of drainage control strategies of a hydrogen fuel cell system, measurements are taken measuring the state of the fuel cell system, wherein the plurality of drainage control strategies refer to the discharge of moisture from the hydrogen circulation loop of the hydrogen fuel cell system at multiple frequencies and/or multiple durations; and/or measurements measured measuring the state of the fuel cell system under a plurality of exhaust control strategies, wherein the plurality of exhaust control strategies refer to the discharge of the mixed gas from the hydrogen circulation loop of the hydrogen fuel cell system at multiple frequencies and/or multiple durations.

In one example, the measurement results comprise: In various working conditions, the state of the hydrogen fuel cell system and the humidity at the anodic inlet of the fuel cell stack.

According to another aspect of the present invention there is provided a humidity prediction device for an in-vehicle hydrogen fuel cell system configured to perform a humidity prediction method as described above.

According to yet another aspect of the present invention there is provided an in-vehicle hydrogen fuel cell system comprising: Fuel cell stacks and controller. The controller includes a humidity prediction device as described above.

In an example, the controller is configured to: Water management of hydrogen fuel cell systems based on the predicted humidity to ensure that the proton exchange membrane of the fuel cell stack is operating at a predetermined recommended humidity.

According to yet another aspect of the present invention there is provided a method for training an AI model to predict a gaseous water molar fraction at an anodic inlet of a fuel cell stack of an in-vehicle hydrogen fuel cell system, comprising: constructing a first training dataset including measurements resulting from measuring a state of the hydrogen fuel cell system in one or more vehicle running conditions; constructing a second training dataset including measurements resulting from measuring a state of the hydrogen fuel cell system in one or more operating conditions of the hydrogen fuel cell system; and using the first training dataset and the second training dataset to train an AI model for the hydrogen fuel cell system to enable the trained AI model to predict a water molar fraction at the anodic inlet of the hydrogen fuel cell stack.

According to yet another aspect of the present disclosure, a machine-readable storage medium is provided, the machine-readable storage medium having stored executable instructions that, when executed, cause one or more processors to perform the humidity prediction method or said AI model training method as described above.

The above gives an overview of the main aspects of the present disclosure in order to allow for a basic understanding of these aspects. This overview is not intended to define the scope of any or all aspects of the present disclosure. The purpose of this overview is to provide some implementations of these aspects in a simplified form as a preamble to the detailed description given later.

**Description of Accompanying Drawings**

The present invention relates to an illustration description. The following detailed description in conjunction with the accompanying drawings will make the technical solution of the present invention clearer. It may be understood that these accompanying drawings are merely used for illustration purposes, but are not intended to limit the protection scope of the present disclosure.

FIG. 1 is a schematic block diagram of an in-vehicle hydrogen fuel cell system according to one embodiment of the present invention.
FIG. 2 shows schematically a mixed model according to examples of the present invention.
FIG. 3 is a flow chart of a method of humidity prediction for an in-vehicle hydrogen fuel cell system according to one embodiment of the present invention.
FIG. 4 is a flow chart of a method for training an AI model to predict a gaseous water molar fraction at an anodic inlet of a fuel cell stack of an in-vehicle hydrogen fuel cell system according to an embodiment of the present invention.

**Specific Embodiments**

The inventor discovered that: Among the many features of an in-vehicle hydrogen fuel cell system (hereinafter referred to as a hydrogen fuel cell system), the humidity at the anodic inlet of the fuel cell stack is strongly associated with the temperature, pressure, and current-related features of the fuel cell stack. Based on this, and given that existing humidity sensors are unable to meet the vehicle specification requirements in terms of durability and are expensive, the inventors propose that: A mixed model is employed to predict a solution for humidity at the anodic inlet of a fuel cell stack based on the above-mentioned strong correlation characteristics of the hydrogen fuel cell system.

According to an example of the present invention, a mixed model includes a physical model and an AI model of a hydrogen fuel cell system. The AI model may be implemented as a trained multilayer perceptron neural network (MLP NN)

According to examples of the present invention, training data based on various vehicle operating conditions and various hydrogen fuel cell system operating conditions is employed in training of AI models, whereby the trained AI model has robust humidity prediction capabilities because the AI model is capable of providing accurate humidity prediction results under various scenarios (e.g., vehicle driving on different types of roads or different power outputs provided by hydrogen fuel cell systems/fuel cell engines) with high reliability.

The humidity prediction solution according to examples of the present invention is achieved by deploying the above-mentioned mixed model in a controller of a hydrogen fuel cell system without adding hardware such as a high-precision and strong-durability humidity sensor to an in-vehicle hydrogen fuel cell system, thereby enabling a humidity prediction solution for an in-vehicle hydrogen fuel cell system without adding hardware.

The following describes specific embodiments of the present disclosure with reference to the accompanying drawings.

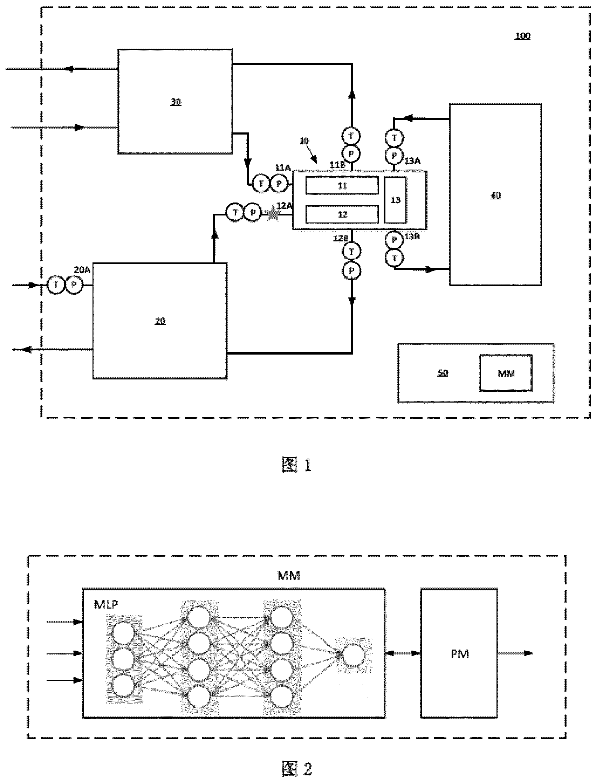

FIG. 1 shows a hydrogen fuel cell system 100 according to one embodiment of the present invention. The hydrogen fuel cell system 100 is adapted to be disposed on a vehicle and constitutes a fuel cell engine for the vehicle. As described in FIG. 1, the hydrogen fuel cell system 100 includes: The fuel cell stacks 10, the hydrogen supply module 20, the air supply module 30, the cooling module 40, the temperature sensor T, the pressure sensor P, and the controller 50.

The fuel cell stacks 10 include a cathodic 11, an anodic 12, and a cooling connection 13. The cathodic 11 receives air or oxygen (oxidant), the anode 12 receives hydrogen (reductant), and the oxidant and reductant undergo an electrochemical reaction in the fuel cell stack with the action of the catalyst, thereby converting the chemical energy into electrical energy. The cooling connection portion 13 is connected to the cooling module 40, e.g., cooling water flows from the cooling module 40 into the fuel cell stacks 10 through the cooling connection 13, and returns to the cooling module 40 through the cooling connection 13 after circulating flow in the fuel cell stacks 10, thereby taking the heat from the fuel cell stacks 10 to function as the cooling for fuel cell stacks 10.

The hydrogen supply module 20 is fluidly coupled with the anodic 12 of the fuel cell stacks 10 to provide hydrogen to the anodic 12 of the fuel cell stacks 10. The hydrogen supply module 20 may include a hydrogen circulation subsystem. In the hydrogen circulation subsystem, there is a drain valve (not shown) and a exhaust valve (not shown). The drain valve, when opened, is able to drain the moisture carried in the circulating hydrogen. The exhaust valve, when opened, is capable of discharging the circulating mixed gas in the hydrogen circulation subsystem.

The air supply module 30 is fluidly connected with the cathode 11 of the fuel cell stacks 10 for providing oxygen to the cathode 11 of the fuel cell stacks 10. For example, the air supply module 30 may provide sufficient air to the fuel cell stacks 10 through an air compressor (not shown) to prevent insufficient supply of oxidants required for reaction.

The cooling module 40 is used to provide cooling for the hydrogen fuel cell system 100. For example, the heat generated by the operation of the fuel cell stacks 10 may be brought to the heat sink (not shown) by cooling water and transferred to the environment by the heat sink.

The temperature sensor T may include a plurality of temperature sensors arranged in different locations in the hydrogen fuel cell system 100 in order to measure the temperature at the various locations. The pressure sensor P may include a plurality of pressure sensors arranged in different locations in the hydrogen fuel cell system 100 in order to measure pressure at different locations. The hydrogen fuel cell system 100 may also include a sensor (not shown) for monitoring the internal resistance and voltage of the fuel cell stacks 10, thereby obtaining a current of the fuel cell stacks 10. In addition, the hydrogen fuel cell system 100 may also include a sensor (not shown) for measuring the current of the fuel cell stacks 10. Based on the resulting current, it is possible to calculate the rate of current change over time, i.e., the rate of current change of the fuel cell stacks.

The controller 50 is capable of coordinating the control of the health of various modules of the hydrogen fuel cell system 100. According to an example of the present invention, the controller 50 may employ a mixed model (MM) and predict humidity at the anodic inlet of the fuel cell stacks 10 (see the location shown by the pentagons in FIG. 1) based on measurements from multiple temperature sensors T and multiple pressure sensors P.

FIG. 2 shows schematically one example of a mixed model (MM). Referring to FIG. 2, the mixed model (MM) includes a physical model and an AI model capable of interacting information with each other. The physical model may comprise a plurality of sub-models (e.g., a plurality of formulas) for calculating parameters that will be used in subsequent calculations or that will be AI model input according to parameters that can be measured, respectively. For example, the physical model comprises: A sub-model for calculating saturating vapor pressure at the anodic inlet of fuel cell stacks based on the temperature at the anodic inlet of the fuel cell stacks and a sub-model for calculating humidity at the anodic inlet of the fuel cell stacks based on the gaseous water molar fraction at the anodic inlet of the fuel cell stacks.

The AI model is implemented as a multilayer perceptron neural network (MLP NN). This multi-layer perceived neural network is packaged into a mixed model with a physical model (PM) after completion of training and deployed into the controller 50. Inputs (feature inputs) to the AI model may include measurement parameters (e.g., temperatures and pressures at different locations in the hydrogen fuel cell system 100 and a rate of current change for the fuel cell stacks). The input (feature input) of the AI model may also include computational parameters calculated by the physical model (e.g., a gaseous water molar score at the anodic outlet of the fuel cell stacks). The output of the AI model is the gaseous water molar fraction at the anodic outlet of the fuel cell stacks. The physical model then calculates the humidity at the anodic outlet of the fuel cell stacks based on the gaseous water molar fraction at the anodic outlet of the fuel cell stacks output by the AI model.

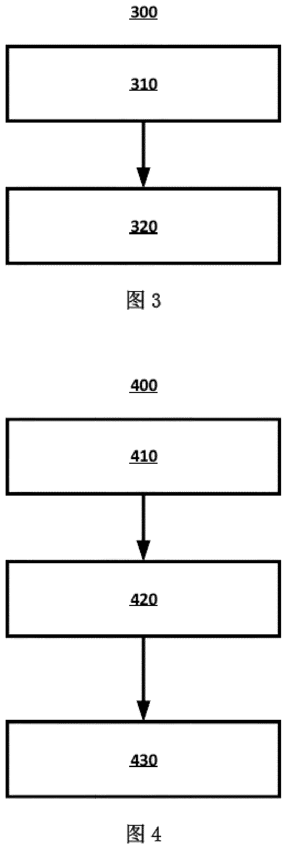

FIG. 3 shows a humidity prediction method 300 for an in-vehicle hydrogen fuel cell system according to an embodiment of the present invention. The method 300 may be implemented in the controller 50 or in-vehicle hydrogen fuel cell system 100 described above, so the description above with respect to the controller 50 and the in-vehicle hydrogen fuel cell system 100 is equally applicable here. The method 300 may be an on-line method, i.e., performing real-time humidity predictions during operation of an in-vehicle hydrogen fuel cell system.

Referring to FIG. 3, at block 310, the controller 50 obtains status parameters that characterize the current state of the hydrogen fuel cell system 100. This state parameter may be measured in real time by the temperature sensor T and pressure sensor P described above. In an example, the status parameters include one or more of the following.

1) The current temperature and current pressure at the anodic inlet 12A of the fuel cell stacks 10. This temperature and pressure may be measured by a temperature sensor T and a pressure sensor P disposed at the anodic inlet 12A of the fuel cell stacks 10.

2) The current temperature and current pressure at the anodic outlet 12B of the fuel cell stacks 10. This temperature and pressure may be measured by a temperature sensor T and a pressure sensor P disposed at the anodic inlet 12B of the fuel cell stacks 10.

3) The current temperature and current pressure of 11A at the cathodic inlet of the fuel cell stacks 10. This temperature and pressure may be measured by a temperature sensor T and a pressure sensor P disposed at 11A at the cathodic inlet of the fuel cell stacks 10.

4) Current temperature and current pressure at the cathodic inlet 11B of the fuel cell stacks 10. This temperature and pressure may be measured by a temperature sensor T and a pressure sensor P disposed at the cathodic inlet 11B of the fuel cell stacks 10.

5) The current temperature and current pressure of the hydrogen supply module inlet 20A of the fuel cell stacks 10. This temperature and pressure may be measured by a temperature sensor T and a pressure sensor P disposed at the hydrogen supply module inlet 20A.

6) Current rate of current change of the fuel cell stacks 10. This rate of current change may be obtained by a measured or calculated current of the fuel cell stacks 10.

7) Current temperature and current pressure at the cooling water inlet 13A of the fuel cell stacks 10. This temperature and pressure may be measured by a temperature sensor T and a pressure sensor P disposed at the cooling water inlet 13A.

8) Current temperature and current pressure at the cooling water outlet 13B of the fuel cell stacks 10. This temperature and pressure may be measured by a temperature sensor T and a pressure sensor P disposed at the cooling water outlet 13B.

In block 320, the controller 50 predicts humidity at the anodic inlet 12A of the fuel cell stacks 10 based on the acquired status parameters and using a mixed model. The mixed model includes a physical model of the hydrogen fuel cell system 100 and a trained AI model.

In an example, the acquired status parameters as well as the gaseous water molar fraction at the anodic outlet 12B of the fuel cell stacks 10 are input into an AI model as a model input. The AI model predicts the gaseous water molar fraction at the anodic inlet 12A of the fuel cell stacks 10 based on the input and outputs the predicted gaseous water molar fraction. The gaseous water molar fraction at the anodic outlet 12B of the fuel cell stacks 10 may be calculated from a physical model based on the relative humidity of the anodic outlet (the on-going anodic outlet relative humidity is greater than or equal to 100%, e.g., a value between 100%-110%). The physical model then calculates humidity at the anodic inlet 12A of the fuel cell stacks 10 based on the gaseous water molar fraction output by the AI model. For example, the physical model calculates humidity at the anodic inlet 12A of the fuel cell stacks 10 based on formulas (1) and (2) as follows:

$$Rh_U = P_U * Rho_U / P_{Usat} \qquad (1)$$

$$P_{Usat} = 610.78e^{17.269\,(Tu-273.16)\,/(Tu-35.86)} \qquad (2)$$

wherein the $Rh_U$ is the humidity at the anodic inlet of the fuel cell stacks;

$P_U$ is the pressure at the anodic inlet of the fuel cell stacks;
$Rho_U$ is the gaseous water molar fraction predicted by the AI model;
$P_{Usat}$ is the saturated vapor pressure at the anodic inlet of the fuel cell stacks;

Tu is the temperature at the anodic inlet of the fuel cell stacks.

In addition, according to examples of the present invention, it may further comprise: Water management of hydrogen fuel cell systems based on the predicted humidity to ensure that the proton exchange membrane of the fuel cell stack is operating at a predetermined recommended humidity. This recommended humidity is the pre-determined optimum humidity considering a combination of factors, e.g., reaction efficiency of hydrogen fuel cells and the lifespan of proton exchange membranes, among others.

Embodiments of the present invention also provide for a humidity prediction device for an in-vehicle hydrogen fuel cell system for implementing the above-described humidity prediction method 200. The humidity prediction device may be disposed in the controller 50.

In an example, the humidity prediction device comprises: an acquisition module configured to acquire status parameters that characterize a current state of a hydrogen fuel cell system; and a prediction module configured to predict current humidity at an anodic inlet of fuel cell stacks of the hydrogen fuel cell system based on the acquired status parameters and using a mixed model. The acquisition module and the prediction module may be implemented in a software manner. Moreover, the name of the acquisition module and the prediction module are functional and can be combined into one module or divided into sub-modules.

The humidity prediction device according to examples of the present invention obtains (calculates) humidity by means of a mixed model without requiring a humidity sensor to be provided as hardware in an in-vehicle hydrogen fuel cell system, and therefore, the humidity prediction device according to examples of the present invention may also be referred to as a virtual humidity sensor.

FIG. 4 is a flow chart of a method 400 for training an AI model to predict a gaseous water molar fraction at an anodic inlet of fuel cell stacks of an in-vehicle hydrogen fuel cell system according to one embodiment of the present invention. The method 400 may be implemented on a computing cloud platform. The computing cloud platform is, for example, a distributed cluster. The method 400 may be an off-line method, i.e., training data is collected in a test vehicle or in a laboratory environment, and the collected data is then uploaded to a computing cloud platform and trained AI models using the training data on the computing cloud platform. The trained AI model and the physical model were packaged together to form a mixed model. A mixed model is deployed into the controller 50 of the in-vehicle hydrogen fuel cell system 100 for use in the on-line method 300 described above.

Referring to FIG. 4, at block 410, a first training dataset is constructed. The first training dataset is based on a variety of vehicle driving conditions. As such, the trained AI model is capable of having good prediction capabilities in various vehicle driving conditions where training data used to train the AI model includes a first training dataset.

In an example, a variety of vehicle driving conditions include those where the vehicle is driving on multiple types of roads. Multiple types of roads: Urban roads, village roads and highways. Below, the collection of training data under urban road conditions is described as an example. For example, the status of the hydrogen fuel cell system 100 is measured to obtain measurements during testing of a vehicle traveling on a city road. This measurement includes the temperature and pressure at a plurality of locations in the hydrogen fuel cell system 100 (each of which is described above, not described in details here) and the rate of current change of the fuel cell stacks. The measurement results also include the measurement of humidity at the anodic outlet of the fuel cell stacks in the process with a humidity sensor installed in the fuel cell system of the test vehicle. Training data corresponding to urban road conditions are thus obtained. Training data corresponding to the driving conditions on other road types may be obtained in similar methods, which shall not be repeated.

It should be understood that a humidity sensor is employed in obtaining training data, which is used only for the test phase to collect training data, and therefore does not have strict requirements for durability of the humidity sensor, e.g., the durability of the humidity sensor does not need to meet the requirements of the vehicle specification.

In another example, a variety of vehicle driving conditions include those where the vehicle is driving at a plurality of levels of vehicle speed (e.g., multiple vehicle speed ranges). For example, the average vehicle speed of the test vehicle is 20-30 km/hr, 40-60 km/hr, 80-100 km/hr, respectively, and the status of the hydrogen fuel cell system 100 is measured in various working conditions to obtain the measurements. This measurement includes the temperature and pressure at a plurality of locations in the hydrogen fuel cell system 100 (each of which is described above, not described in details here) and the rate of current change of the fuel cell stacks. The measurement results also include the measurement of humidity at the anodic outlet of the fuel cell stacks in the process with a humidity sensor installed in the fuel cell system of the test vehicle. Training data corresponding to the driving conditions of the plurality of vehicle speed ranges is thus obtained.

It should be understood that in examples where the first training dataset is constructed, only road-based training data may be employed, and only vehicle speed range-based training data may be employed, as may training data based on a combination of road types and vehicle speed ranges. For example, multiple vehicle speed ranges are employed on certain types of roads and measurements of temperature, pressure, etc. are obtained, thereby obtaining training data corresponding to the driving condition.

In block 420, a second training dataset is constructed. The second training dataset includes measurements obtained to measure the status of the hydrogen fuel cell system in a variety of driving conditions of the hydrogen fuel cell system. The second training dataset is obtained in an experimental setting (e.g., a laboratory bench), i.e., by setting different hydrogen fuel cell system conditions in a laboratory setting.

In an example, a variety of working conditions of the hydrogen fuel cell system include a variety of output power conditions of the hydrogen fuel cell system. A variety of output power conditions may include those where the output power is incremented in a discrete manner or in a continuous manner. For example, the output power of the hydrogen fuel cell system is 70 kW, 80 kW, 100 kW, and 130 kW, respectively, over a plurality of sub-periods of a predetermined period of time. For example, during this predetermined period of time, the output power of the hydrogen fuel cell system gradually increases from 70kW to 130kW in a continuous manner. Similarly, a variety of output power working conditions may also include working conditions where the output power is decremented in a discrete manner or in a continuous manner. For example, the output power of the hydrogen fuel cell system is 130 kW, 100 kW, 80 kW, and 70 kW, respectively, over a plurality of sub-periods of a predetermined period of time. For example, the output power of the hydrogen fuel cell system gradually decreases from 130kW to 70kW in a continuous manner over this predetermined period of time. The status of the hydrogen fuel cell system 100 is measured in various output power working conditions to obtain measurements. This measurement includes the temperature and pressure at a plurality of locations in the hydrogen fuel cell system 100 (each of which is described above, not described in details here) and the rate of current change of the fuel cell stacks. The measurement results also include the measurement of humidity at the anodic outlet of the fuel cell stacks in the process with a humidity sensor installed in the fuel cell system of the test vehicle.

Through this example, the training data for the AI model is capable of covering a variety of system output power working conditions, thereby enabling the trained AI model to have good predictive capabilities at the output power of various systems.

In another example, a variety of operating conditions of the hydrogen fuel cell system include the dynamic output power of the hydrogen fuel cell system and the working conditions of the steady state output power. Dynamic output power working conditions include: The output power of hydrogen fuel cell systems changes greatly in a short period of time, for example, from abrupt (step) change of 60kW to 130kW, or from abrupt (step) change of 130kW to 60kW. Steady state output power working conditions include: Stable power output for a predetermined period of time (e.g., the output power for that period is unchanged or the magnitude of the change is very small). The status of the hydrogen fuel cell system 100 is measured in dynamic output power conditions and steady state output power conditions, respectively, to obtain measurements. This measurement includes the temperature and pressure at a plurality of locations in the hydrogen fuel cell system 100 (each of which is described above, not described in details here) and the rate of current change of the fuel cell stacks. The measurement results also include the measurement of humidity at the anodic outlet of the fuel cell stacks in the process with a humidity sensor installed in the fuel cell system of the test vehicle.

Using the training data obtained by this example to train the AI model, the prediction results of the trained AI model can be well-followed, both in the cases of dynamic and steady conditions in output power of hydrogen fuel cell systems.

In yet another example, a variety of operating conditions of the hydrogen fuel cell system include a variety of control strategies for the system, for example, a variety of drain control strategies and/or a variety of exhaust control strategies. A variety of drainage control strategies refer to the discharge of moisture in a hydrogen circulation circuit of a hydrogen fuel cell system at a plurality of frequencies and/or times. For example, the drain valve in the hydrogen circulation subsystems that control hydrogen fuel cell systems is opened at different frequencies and controls the length of time each opening. A variety of exhaust control strategies refer to the removal of mixed gas from the hydrogen circulation circuit of the hydrogen fuel cell system at a plurality of frequencies and/or for a plurality of times. For example, the exhaust valves in the hydrogen circulation subsystems that control hydrogen fuel cell systems open at different frequencies and control the length of time each opening. In addition, a variety of combinations of drainage control and exhaust control strategies can be implemented, resulting in more abundant drainage and exhaust working conditions. The status of the hydrogen fuel cell system 100 is measured separately in various drainage and/or exhaust conditions to obtain measurements. This measurement includes the temperature and pressure at a plurality of locations in the hydrogen fuel cell system 100 (each of which is described above, not described in details here) and the rate of current change of the fuel cell stacks. The measurement results also include the measurement of humidity at the anodic outlet of the fuel cell stacks in the process with a humidity sensor installed in the fuel cell system of the test vehicle.

Through this example, the training data for the AI model is capable of covering a variety of drainage and exhaust working conditions, so that the trained AI model is capable of having good prediction capabilities in a variety of drainage and exhaust conditions.

It should be understood that in examples where the first training dataset is constructed, the above-described examples may be combined to achieve a more abundant and comprehensive working condition of the hydrogen fuel cell system to obtain training data corresponding to a more abundant working condition.

In block 430, the AI model is trained using the first training dataset and the second training dataset to enable the trained AI model to predict humidity at the anodic inlet of the fuel cell stack based on the current state of the hydrogen fuel cell system. An example of training AI is described below.

In an example, the AI model is implemented as a multilayer perceptron neural network including an input layer, a plurality of hidden layers, and an output layer. The temperature, pressure, and rate of current change collected under the various working conditions are passed into the input layer and the predicted humidity (virtual humidity) is output from the output layer by calculation in the plurality of hidden layers. Compare the predicted humidity with the measured humidity under the corresponding working conditions to obtain the error. This error was caused to converge by reverse propagation and gradient descent. For example, for each of the working condition training examples, the temperature, pressure, and rate of current change are transmitted to the neural network and its output is calculated, i.e., predicted humidity. The error is then measured, i.e., the difference between the humidity predicted and the measured humidity under the corresponding working conditions, and the neurons' contribution to the error output result in the previous hidden layer is calculated repeatedly from the last layer to the first layer until the algorithm reaches the input layer. The error gradient of all the connection weights in the network is thus effectively measured, and finally the parameters of the layer are optimized by applying a gradient descent algorithm in each hidden layer, i.e., the error is fed back to the neural network and the parameters are automatically adjusted, and the error is reduced by multiple adjustments.

In addition, in order to ensure the accuracy of an AI model applied to an in-vehicle hydrogen fuel cell system, a process for validating the accuracy of the AI model may also be included according to examples of the present invention. For example, the accuracy threshold of the AI model is set to calculate the difference between the predicted humidity in a working condition and the measured humidity in the working condition obtained by the trained AI model. If the difference satisfies the accuracy threshold, i.e., the difference is less than or equal to the precision threshold, the trained AI model is considered to satisfy the accuracy requirement and can be set to an in-vehicle hydrogen fuel cell system. Conversely, if the difference does not meet the accuracy threshold, i.e., the difference is greater than the accuracy threshold, the model's accuracy needs to be further improved until the accuracy threshold is met before it can be set in an in-vehicle hydrogen fuel cell system. Methods to further improve model accuracy include, for example: The skeletons of the AI model are adjusted for retraining, or training data is re-collected for retraining.

In addition, in order to improve the robustness of the AI model, a process of cross-verification may also be included according to examples of the present invention. For example, multiple hydrogen fuel cell systems and/or multiple measurements are employed as described above, resulting in cross-verification of the results of the measurements obtained, thereby improving the robustness and generalization capabilities of the model.

According to examples of the present invention, the present disclosure also provides a machine-readable storage medium having executable instructions stored thereon that, when executed, cause one or a plurality of processors to perform the prediction method 300 or training method 400 described above.

It should be understood that processors may be implemented using electronic hardware, computer software, or any combination thereof. Whether these processors are implemented as hardware or software will depend on the specific application and overall design constraints imposed on the system. As an example, the processors, any portions thereof, or any combinations of the processors provided herein can be implemented as microprocessors, microcontrollers, digital signal processors (DSPs), field-programmable gate arrays (FPGAs), programmable logic devices (PLDs), state machines, gate logic, discrete hardware circuits, and other suitable processing components configured to perform various functionalities described in the present disclosure. The functions of the processors, any portions thereof, or any combinations of the processors provided herein may be implemented as software executed on platforms such as microprocessors, microcontrollers, DSPs, or other suitable platforms.

It should be understood that software may be broadly construed as representing instructions, instruction sets, code, code segments, program codes, programs, subprograms, software modules, applications, software applications, software packages, routines, subroutines, objects, execution threads, processes, functions, and the like. Software may reside on computer-readable media. Computer-readable media can include, for example, storage devices such as magnetic storage devices (e.g., hard drives, floppy disks, magnetic tapes), optical disks, smart cards, flash devices, random-access memory (RAM), read-only memory (ROM), programmable ROM (PROM), erasable PROM (EPROM), electrically erasable PROM (EEPROM), registers, or removable disks. Although memory is depicted as being separate from the processor in several aspects provided in the present disclosure, memory may also be located within the processor (e.g., cache or registers).

Although some embodiments are described above, these embodiments are provided by way of example only, and are not intended to limit the scope of the present disclosure. The appended claims and their equivalents are intended to cover all modifications, substitutions and changes made within the scope and subject matter of the present disclosure.

**Claims**

1. A humidity prediction method for an in-vehicle hydrogen fuel cell system, comprising:

    obtaining status parameters that characterize a current state of a hydrogen fuel cell system; and
    predicting current humidity at the anodic inlet of fuel cell stacks of a hydrogen fuel cell system based on the acquired status parameters and using a mixed model,
wherein the mixed model includes a physical model and an AI model of the hydrogen fuel cell system trained using a first training dataset and a second training dataset comprising measurements resulting from a measurement of a state of the hydrogen fuel cell system in a driving condition of one or more vehicles, and the second training dataset comprising measurements obtained by measuring the state of the hydrogen fuel cell system under one or more operating conditions of the said hydrogen fuel cell system.

2. The method of humidity prediction according to Claim 1, wherein the physical model comprises a plurality of sub-models for calculating parameters to be used in subsequent operations or parameters as AI model input according to parameters that can be measured;

the AI model is used to predict a gaseous water molar fraction at an anodic inlet of fuel cell stacks based on the acquired status parameters and either parameters calculated by the physical model or pre-determined parameters; and
a sub-model of a plurality of sub-models of the physical model is used to calculate humidity at the anodic inlet of the fuel cell stacks based on the gaseous water molar fraction at the anodic inlet of the fuel cell stacks predicted by the AI model.

3. The humidity prediction method of Claim 1 or 2, wherein the status parameters that characterize the current state of a hydrogen fuel cell system include one or more of:

- current temperature and current pressure at the anodic inlet of the fuel cell stack;
- current temperature and current pressure at the anodic outlet of the fuel cell stack;
- current temperature and current pressure at the cathodic inlet of the fuel cell stack;
- current temperature and current pressure at the cathodic outlet of the fuel cell stack;
- current temperature and current pressure at the inlet of the hydrogen supply module of the fuel cell stack;
- current rate of current change of the fuel cell stack;
- current temperature and current pressure at the inlet of the cooling water of the fuel cell stack; and
- current temperature and current pressure at the cooling water outlet of the fuel cell stack.

4. The humidity prediction method of any of Claims 1-3, wherein the first training dataset comprises:

measuring a measurement of a state of a fuel cell system as the vehicle is traveling on one or more types of roads, wherein the one or more types of roads include one or more of urban roads, village roads, and highways; and/or
a measurement of a state of a fuel cell system is measured when the driving speed of the vehicle is within one or more vehicle speed ranges.

5. The humidity prediction method of any one of Claims 1-4, wherein the second training dataset comprises:

measuring measurements obtained from the state of the fuel cell system in working conditions where the output power of the fuel cell stacks is increasing; and/or
measuring measurements obtained from the state of the fuel cell system in working conditions where the output power of the fuel cell stacks is decreasing.

6. The humidity prediction method of any of Claims 1-5, wherein the second training dataset comprises:

measuring measurements obtained from the state of the fuel cell system in working conditions where the output power of the fuel cell stacks is dynamically changing; and/or
measuring measurements obtained from the state of the fuel cell system in working conditions where the output power of the fuel cell stacks is steady.

7. The humidity prediction method of any one of Claims 1-6, wherein the second training dataset comprises:

measuring measurements obtained from a state of a fuel cell system under a variety of drainage control strategies of the hydrogen fuel cell system, wherein the plurality of drainage control strategies refer to the evacuation of humidity in a hydrogen circulation circuit of the hydrogen fuel cell system at a plurality of frequencies and/or times; and/or
measuring measurements obtained from a state of a fuel cell system under a variety of exhaust control strategies of the hydrogen fuel cell system, wherein the plurality of exhaust control strategies refer to the evacuation of a mixed gas in a hydrogen circulation circuit of the hydrogen fuel cell system at a plurality of frequencies and/or times.

8. The humidity prediction method according to any one of Claims 4-7, wherein the measurement results comprise: in various working conditions, the state of the hydrogen fuel cell system and the humidity at the anodic inlet of the fuel cell stack.

9. A humidity prediction device for an in-vehicle hydrogen fuel cell system configured to perform the humidity prediction method of any one of Claims 1-8.

10. A in-vehicle hydrogen fuel cell system comprising: Fuel cell stacks and a controller comprising the humidity prediction device of Claim 9.

11. The in-vehicle hydrogen fuel cell system of Claim 10, wherein the controller is configured to: Water management of hydrogen fuel cell systems based on the predicted humidity to ensure that the proton exchange membrane of the fuel cell stack is operating at a predetermined recommended humidity.

12. A method for training an AI model to predict a gaseous water molar fraction at an anodic inlet of a fuel cell stack of an in-vehicle hydrogen fuel cell system, comprising:

   constructing a first training dataset including measurements resulting from measuring a state of the hydrogen fuel cell system in a driving condition of one or more vehicles;
   constructing a second training dataset including measurements resulting from measuring a state of the hydrogen fuel cell system under one or more working conditions of the hydrogen fuel cell system; and
   the first training dataset and the second training dataset are used to train an AI model of a hydrogen fuel cell system to enable the trained AI model to predict a water molar fraction at the anodic inlet of the fuel cell stack based on status parameters of the hydrogen fuel cell system.

13. A machine-readable storage medium having stored executable instructions that, when executed, cause one or more processors to perform the humidity prediction method of any of Claims 1-8 or the said AI model training method of Claim 12.

图 1

图 2

300

310

320

图 3

400

410

420

430

图 4

Europäisches
Patentamt

European
Patent Office

Office européen
des brevets

## EUROPEAN SEARCH REPORT

**Application Number**

EP 24 22 0076

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 133 074 A (BOSCH GMBH ROBERT) 30 September 2022 (2022-09-30) | 1-3,8-13 | INV. H01M8/04492 H01M8/04828 H01M8/04992 |
| Y | * claims 1-6 * | 1 | |
| Y | CN 115 763 900 A (BEIJING SINOHYTEC CO LTD) 7 March 2023 (2023-03-07) * Beneficial effects 1-3, Background technique; example 1 * | 1 | |

TECHNICAL FIELDS
SEARCHED        (IPC)

H01M

The present search report has been drawn up for all claims

| Place of search | Date of completion of the search | Examiner |
|---|---|---|
| Munich | 13 May 2025 | Goldbacher, Ute |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                               
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 0076

This annex lists the patent family members relating to the patent documents cited in  the above-mentioned European search report.
The members are as contained in the European Patent Office EDP file on
The European Patent Office is in no way liable for these particulars which are merely given for the purpose of information.

13-05-2025

| Patent document cited in search report | Publication date | Patent family member(s) | Publication date |
|---|---|---|---|
| CN 115133074 A | 30-09-2022 | NONE | |
| CN 115763900 A | 07-03-2023 | NONE | |

EPO FORM P0459

For more details about this annex : see Official Journal of the European Patent Office, No. 12/82